# EUROPEAN PATENT APPLICATION

(11) **EP 4 360 817 A1**
(43) Date of publication of application: **01.05.2024**
(21) Application number: 22204803.5
(22) Date of filing: 31.10.2022
(51) Int. Cl.: B25J 9/16, G05B 19/4099

(54) **METHODS FOR CONTROLLING A MANUFACTURING OPERATION, AUTOMATED MANUFACTURING METHODS AND CORRESPONDING DATA PROCESSING APPARATUSES**

(71) Applicant: Stilride AB, 131 52 Nacka Strand (SE)
(72) Inventor: BEIJER, Tue, Nacka Strand (SE)
(74) Representative: Ström & Gulliksson AB

(57) **Abstract**

The present disclosure relates among other things to a computer-implemented method of controlling a manufacturing operation. Material diagnostic data relating to a two-dimensional sheet material is obtained (110). Furthermore, the obtained material diagnostic data is analyzed, or otherwise evaluated, to produce (120) material characteristics data. In addition, information related to a desired three-dimensional design of a product to be manufactured by a manufacturing operation is obtained (130). Furthermore, the method includes producing (140) a digital model of said product, wherein he digital model being based on said material characteristics data and said desired three-dimensional design of the product. A control signal which is based on said digital model is also generated (150). The control signal is further configured to cause the manufacturing equipment to carry out a material reshaping operation on a two-dimensional sheet material to form said physical three-dimensional product in accordance with the digital model.

## Description

### Technical field

The present disclosure generally relates to manufacturing of a product, or object. More specifically, the present disclosure relates to a computer-implemented method of controlling a manufacturing operation. The present disclosure further relates to an automated manufacturing method as well as corresponding data processing apparatuses.

### Background

It is generally known to manufacture three-dimensional products (or, objects) in automated processes.

When manufacturing more complex three-dimensional products such as furniture and vehicles, or when manufacturing consumer products, a number of circumstances needs to be considered and managed. For example, these circumstances may include the amount of material actually needed, how many times the material is to be handled (tempo) throughout the manufacturing process, how the material behaves during the manufacturing operation, etc. These circumstances and others may lead to deviations from what could be seen as a perfect or flawless manufacturing of the end product. In certain scenarios, these deviations could lead to cassation of products, a usage of unnecessarily much material during the manufacturing or even customer dissatisfaction if the end product perhaps malfunctions or breaks too soon during use.

Further, in modern manufacturing many of the steps are performed in a more automated manner, such as for instance by using robots or other types of automated manufacturing, which also typically requires precise instructions for carrying out the manufacturing steps.

The applicant of this disclosure has proposed a novel approach of material processing of a two dimensional sheet like material into a three dimensional shape object. At the time of filing this disclosure, patent applications are currently unpublished and pending under the following application numbers:
- SE 2151044-1
- EP 22192090.3
- EP 22192113.3
- EP 22192117.4
- US 17/895,344
- US 17/895,354
- US 17/895,364
- PCT/SE2022/050763

### Summary

It is in view of the above considerations and others that the embodiments described in this disclosure have been made. The present disclosure therefore recognizes the fact that there is a need for alternatives to (e.g. improvement of) the existing art described above.

It is therefore a general object of some aspects and embodiments described throughout the present disclosure to provide a new approach, which is an alternative to (e.g., improvement over) the existing prior art.

This object is addressed by the appended independent claims.

Advantageous embodiments are set forth in the appended dependent claims and in the following description.

According to a first aspect there is provided a computer-implemented method of controlling a manufacturing operation of a physical three-dimensional product from a two-dimensional sheet material. Material diagnostic data relating to said two-dimensional sheet material is obtained. Furthermore, the obtained material diagnostic data is analyzed, or otherwise evaluated, to produce material characteristics data. In addition, information related to a desired three-dimensional design of a product to be manufactured by the manufacturing operation is obtained. A digital model is produced, or otherwise formed or created. This digital model is based on said material characteristics data and said desired three-dimensional design of the product. A control signal is also generated. This control signal is configured to cause a manufacturing operation to be carried out by a manufacturing equipment. Furthermore, this control signal is based on said digital model. The control signal is further configured to cause the manufacturing equipment to carry out a material reshaping operation on a two-dimensional sheet material to form said physical three-dimensional product in accordance with the digital model.

This means that specific material diagnostic data is obtained from the sheet material which is to be formed, or re-shaped, into the three-dimensional physical product, or object. Specific material diagnostic data may for instance include the specific type of material (steel, plastic, etc.), the specific thickness of the material, the specific flexibility of the material, the specific brittleness of the material, the specific spring-back properties of the material, etc. The material diagnostic data is then utilized to provide (or, calculate) specific material characteristic data, which will subsequently be relevant to take into account during a re-shaping operation, or process. As will be appreciated, the material characteristics data resulting from the materials diagnostic data as well as the information relating to the desired three-dimensional design of the product constitute, or are otherwise utilized as, input to produce the digital model (sometimes also referred to as virtual model as it is a digital representation of the physical object). This allows for the physical product manufactured through this method to become substantially identical to the digital model. As used herein, when it is referred to a physical product, or object, being substantially identical to the digital model this should be understood to mean or indicate that there is a relatively low deviation of typically less than, e.g., 1 % between the actual physical product and the digital model. The present disclosure recognizes the fact that this can achieve a high production yield and a low "scrap rate". This method may also allow for fewer tempos and a shorter cycle time, which may be beneficial from an environmental aspect, in reducing both materials used as well as CO₂-emissons during the manufacturing.

In some embodiments, the computer-implemented method comprises receiving said material diagnostic data from a remote location and analyzing, or otherwise evaluating, said material diagnostic data to produce said material characteristic data.

Optionally, the computer-implemented method additionally comprises collecting said material diagnostic data in a first data storage; and collecting said material characteristic data in a second data storage. The first and second data storages may be separate, and thus different, data storages. Alternatively, the first and second data storages may be a same data storage.

In other embodiments, the computer-implemented method comprises performing at least one material diagnostic test on said two-dimensional sheet material to output said material diagnostic data and analyzing, or otherwise evaluating, said material diagnostic data to produce said material characteristic data.

Optionally, the computer-implemented method additionally comprises collecting said material diagnostic data in a first data storage; and collecting said material characteristic data in a second data storage. The first and second data storages may be separate, and thus different, data storages. Alternatively, the first and second data storages may be a same data storage.

In advantageous embodiments, analyzing said material diagnostic data to produce said material characteristic data includes training a machine learning algorithm to model the material characteristics data. For example, in one embodiment the machine learning algorithm is initialised. A first state of said material diagnostic data is observed. For example, a first state of stored collected material diagnostic data is observed. Next, a change from this first state to a second state can be observed. This change may for example result from performance of at least one material diagnostic test (e.g., a new diagnostic test, in contrast to earlier diagnostic tests) that has an effect on the said material diagnostic data (i.e., the stored earlier-collected material diagnostic data). Furthermore, the machine learning algorithm may be updated based on the observed change of state. In addition, material diagnostics data from newer tests can optionally also be collected such that the sum of all material diagnostic data resulting from several material diagnostic tests is collected. As will be appreciated, the material diagnostics data may be updated in accordance to repeated material diagnostic tests thereby refining the collection of material diagnostic data. In turn, this means that the material characteristics data produced from said material diagnostic data may also be refined over time.

As will be appreciated, by utilizing collected material diagnostic data resulting from several material diagnostic tests may lead to more precise predictions of the material characteristics data. For example, this allows for making more precise predictions of how the sheet material will behave during a subsequent manufacturing operation to form, or shape, a physical product in accordance with the digital model, which is a digital representation of the desired design of the three-dimensional physical object. The improved predictions contribute to the manufacture of an end product, or final product, which becomes substantially identical to the digital model.

In some embodiments, the computer-implemented method may further comprise additional operations. For example, in one embodiment, a verification operation of the physical product of the material re-shaping operation is performed to verify a degree of possible deviation between said digital model and said physical product. Verification data may be collected from said verification operation. Furthermore, said verification data may be stored in a data storage. This data storage may be a third data storage, which separate from either or both of the earlier-mentioned first and second data storages. Alternatively, it is a same data storage as one of or both of the first and second data storages. In this embodiment, producing said digital model of said product may include producing said digital model of said product in such way that the digital model is based on said material characteristics data, said desired three-dimensional design of the product as well as said verification data. This may lead to even further refinements in the predictions that contribute to the manufacture of an end product, or final product.

According to a second aspect, there is provided an automated manufacturing method for a physical product. This automated manufacturing method includes the computer-implemented method of the first aspect.

According to a third aspect, there is provided a computer program comprising instructions which, when executed on at least one processor, cause the at least one processor to carry out the method according to the first aspect. A carrier comprising the computer program according to the third aspect is also proposed. The carrier may be any one of an electronic signal, an optical signal, a radio signal, or a computer-readable medium.

According to a fourth aspect, there is provided a data processing system for controlling a manufacturing operation of a physical three-dimensional product from a two-dimensional sheet material. In some embodiments, the data processing system comprises at least one processor and at least one memory. The at least one memory comprises instructions executable by the at least one processor whereby the data processing system is operative to perform the method according to the first aspect.

Various aspects and embodiments described herein provide a new approach, which is an alternative to (or, improvement over) the existing prior art. The various aspects and embodiments allow for the manufacturing of the product, or object, which is substantially identical to a digital model thereof. The digital model is a digital representation of the physical object to be manufactured. As such, the digital model may serve as a simulation of the physical product to be manufactured. Since the new approach takes into account relevant materials characteristics data along with the desired three-dimensional design of a product to be manufactured, the digital model can be seen as a digital representation of what can be achieved in the real world, i.e. with respect to the physical product to be manufactured.

### Brief description of drawings

Aspects and embodiments of the invention will now be described, by way of example, with reference to the accompanying schematic drawings.
Fig. 1 shows a flow chart of a method in accordance with some embodiments of the invention;
Fig. 2 shows a flowchart of an example embodiment of action 120 in Fig. 1;
Fig. 3 shows an example embodiment of an automated manufacturing method;
Fig. 4 illustrates an example embodiment of a data processing system operable to perform any of the methods discussed in this disclosure; and
Fig. 5 illustrates an example embodiment of a carrier including computer program which comprises instructions which, when executed on a processor cause the processor to carry out any of the methods discussed in this disclosure.

### Detailed description

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements or method steps throughout the description.

As described earlier, some existing solutions in the prior art may be inadequate. It is therefore a general object of some aspects and embodiments described throughout the present invention to provide an alternative to (or, improvement over) the existing prior art.

To address this, in accordance with one aspect, described herein is a computer-implemented method of controlling a manufacturing operation of a physical three-dimensional product from a two-dimensional sheet material. In other words, the method is performed by, or otherwise implemented in a computer device. Material diagnostic data relating to a two-dimensional sheet material is obtained. Furthermore, the obtained material diagnostic data is analyzed, or otherwise evaluated, to produce material characteristics data. Information related to a desired three-dimensional design of a product to be manufactured by the manufacturing operation is also obtained. A digital model is produced, or otherwise formed or created. This digital model is based on said material characteristics data and said desired three-dimensional design of the product. A control signal is also generated. This control signal is configured to cause a manufacturing operation to be carried out by a manufacturing equipment, e.g. placed in a manufacturing area, or cell. Furthermore, this control signal is based on said digital model. The control signal is further configured to cause the manufacturing equipment to carry out a material reshaping operation on a two-dimensional sheet material to form said physical three-dimensional product in accordance with the digital model.

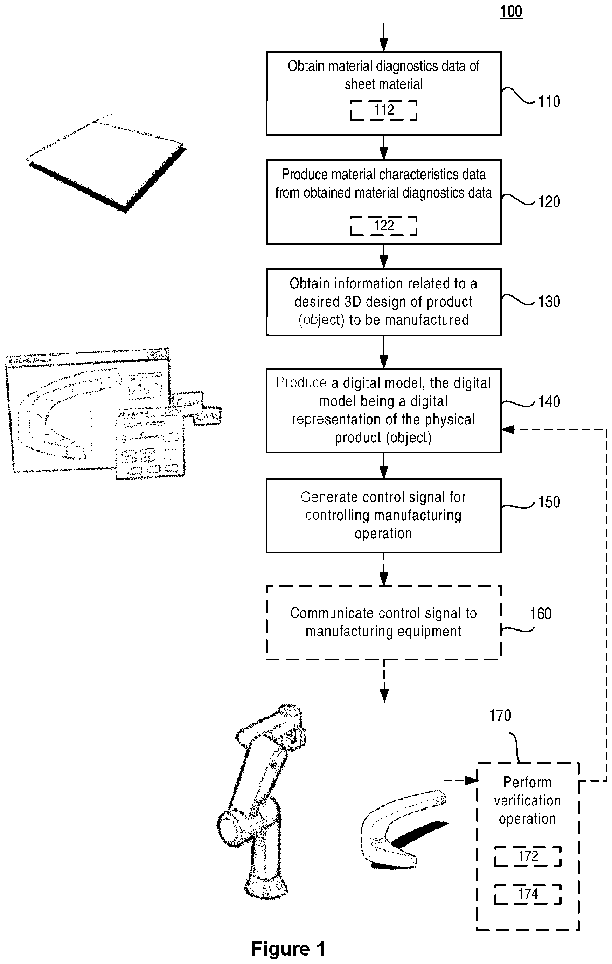

Reference is now made to Fig. 1, which schematically illustrates an embodiment of a method 100 according to a first aspect of the invention. The method is a computer-implemented method 100 of controlling a manufacturing operation of a physical three-dimensional product from a two-dimensional sheet material.

Two-dimensional sheet material can interchangeably be referred to as 'sheet material' only. As used herein, two-dimensional sheet material is used to mean a sheet material which is generally thin and flat. As such, it can typically used in an industrial process, or operation. If the material is metal, reference can be made to 'sheet metal'. Thicknesses can vary significantly, extremely thin sheets are considered foil or leaf, and pieces thicker than 6 mm are considered plate, such as plate steel, a class of structural steel. Sheet metal is generally available in flat pieces or coiled strips. The coils may be formed by running a continuous sheet of metal, e.g., through a roll slitter.

*Action 110:* Material diagnostic data relating to a sheet material is obtained. Specific material diagnostic data may for instance include the specific type of material (steel, plastic, etc.), the specific thickness of the material, the specific flexibility of the material, the specific brittleness of the material, the specific spring-back properties of the material, etc. As will be understood, the sheet material may be any material, but in the following reference will be made to sheet metal for the ease of reading.

Material diagnostic data relating to the sheet metal may be obtained in many different ways.

In some embodiments, the material diagnostics data is received from a remote location. For example, one or several material diagnostic test may be performed or otherwise carried out on sheet metal at a remote location. In some implementations, the material diagnostics test may be performed or carried out by utilizing one or several sensors. The one or several sensors may be configured to sense or otherwise detect different properties of a sheet metal. The material diagnostic test(s) may, e.g., be performed by the manufacturer of the sheet metal. The output from these one or several material diagnostic tests may be the material diagnostics data and this material diagnostics data may be communicated (e.g., transmitted) from the remote location where the test(s) are performed to the computer device in which the method 100 is performed, or otherwise implemented.

Advantageously, the computer-implemented method additionally comprise collecting said material diagnostic data in a first data storage; and collecting said material characteristic data in a second data storage. The first and second data storages may be separate, and thus different, data storages. Alternatively, the first and second data storages may be a same data storage.

In alternative embodiments, the obtaining of said material diagnostics data includes performing one or several material diagnostic test on said sheet metal to output the material diagnostic data. In some implementations, the material diagnostics test may be performed or carried out by utilizing one or several sensors. The one or several sensors may be configured to sense or otherwise detect different properties of a sheet metal. The material diagnostic test may be performed by, for instance, the manufacturer of the physical product (such as in a workshop).

Advantageously, the computer-implemented method may additionally comprise collecting said material diagnostic data in a first data storage; and collecting said material characteristic data in a second data storage. The first and second data storages may be separate, and thus different, data storages. Alternatively, the first and second data storages may be a same data storage.

*Action 120:* The obtained material diagnostic data to produce material characteristics data is analyzed, or otherwise evaluated.

The material characteristics data is data related to the characteristics of the material, i.e. the sheet metal in this example. As will be appreciated by those skilled in the art, the material characteristics may include data related to one or a combination of several of the following:
- Brittleness
- Compressive strength
- Creep
- Ductility
- Durability
- Elasticity
- Fatigue limit
- Flexibility
- Hardness
- Malleability
- Plasticity
- Resilience
- Shear strength
- Strength
- Weight
- Stiffness
- Thickness
- Toughness
- Yield strength

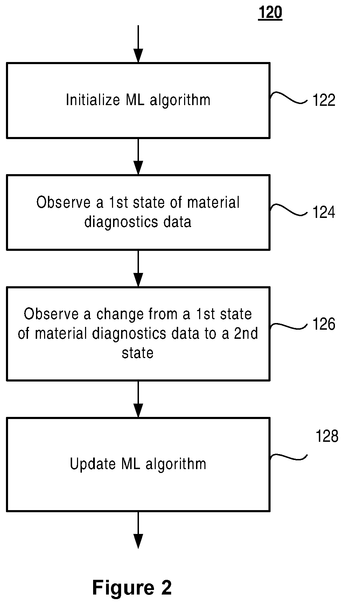

The analysis, or evaluation, of the material diagnostic data to produce material characteristics data could be performed in many different ways that are known to persons skilled in the art of materials technology and science. Reference is now made to Fig. 2, which schematically illustrates an example implementation of action 120. Analyzing the obtained material diagnostic data to produce said material characteristic data may advantageously include training a machine learning (ML) algorithm to model the material characteristics data. For example, in one embodiment the machine learning algorithm is initialised 122. A first state of said material diagnostic data is observed 124. For example, a first state of stored collected material diagnostic data is observed. Next, a change from this first state to a second state can be observed 126. This change may for example result from performance of at least one material diagnostic test (e.g., a new diagnostic test, in contrast to earlier diagnostic tests) that has an effect on the said material diagnostic data (i.e., stored earlier-collected material diagnostic data). Furthermore, the ML algorithm may be updated 128 based on the observed change of state. In addition, material diagnostics data from newer tests can optionally also be collected such that the sum of all material diagnostic data resulting from several material diagnostic tests is collected. As will be appreciated, the material diagnostics data may be updated 128 in accordance to repeated material diagnostic tests thereby refining the collection of material diagnostic data. In turn, this means that the material characteristics data produced from said material diagnostic data may also be refined over time. As will be appreciated, by utilizing collected material diagnostic data resulting from several material diagnostic tests may lead to more precise predictions of the material characteristics data. For example, this allows for making more precise predictions of how the sheet metal will behave during a subsequent manufacturing operation to form, or shape, a physical product.

*Action 130:* Information related to a desired three-dimensional design of a product to be manufactured by the manufacturing operation is obtained. In some implementations, this information may be received from a remote location. In other words, the desired three-dimensional design of a product to be manufactured by the manufacturing operation may be communicated (e.g., transmitted) from a remote computer device. In the present example implementation, the information is instead obtained by user interaction and operation of a User Interface (UI) of the computer device that performs or otherwise implements method 100.

In one example implementation, a user (e.g., a customer) provides information relating to the desired three-dimensional design of a physical product (e.g. consumer product or a manufacturing product) through the UI of the computer device. As such, the computer device may be any suitable data processing system or apparatus, but is generally implementing software advantageous for design and constructional computer programs such as computer-aided design (CAD).

*Action 140:* A digital model of the desired product three-dimensional design of a product to be manufactured is produced, or otherwise created or generated. The digital is based on said material characteristics data and said desired three-dimensional design of the product. In other words, the computer device performing or otherwise implementing the method 100 is configured to perform calculations or predictions based on the input of at least said material characteristic data and said desired three dimensional design of the product (object) to be manufactured, thereby creating a digital model (aka virtual model). The digital model may thus serve as a simulation of the physical product to be manufactured, as it utilizes material characteristics data as well as the desired product three-dimensional design of a product to be manufactured as input, which is used to calculate or otherwise predict the physical state of an existing real product or object. As will be appreciated, the produced digital model takes into account relevant materials characteristics data along with the desired three-dimensional design of a product to be manufactured. The digital model can therefore be seen as a digital representation of what can be achieved in the real world, i.e. with respect to the physical product to be manufactured.

*Action 150:* A control signal is generated. This control signal is configured to cause a manufacturing operation to be carried out by a manufacturing equipment. The control signal is based on the digital model and is further configured to cause the manufacturing equipment to carry out a material reshaping operation on the sheet metal to form the physical three-dimensional product in accordance with the digital model.

In some embodiments, the manufacturing equipment incorporates the computer device performing or otherwise implementing the method 100. The manufacturing equipment may include an automated machine, or a robot such as an industrial robot. Upon receiving the control signal, the manufacturing equipment is accordingly configured to perform the material reshaping operation onto the sheet metal to form the desired three-dimensional object according to the digital model, and thus physical product.

In alternative embodiments, the manufacturing equipment is located at a different location (e.g., a remote or distant location). Again, the manufacturing equipment may include an automated machine, or a robot such as an industrial robot. The control signal may thus be communicated 160 (e.g., transmitted) to the remotely located manufacturing equipment. Upon receiving the control signal, the manufacturing equipment is accordingly configured to perform the material reshaping operation onto the sheet metal to form the desired three-dimensional object according to the digital model, and thus physical product.

*Action 170:* A verification operation of the physical product resulting from the material re-shaping operation may optionally be performed. This may be done in order to verify a degree of possible deviation between the digital model and the end product, i.e. the physical product. Verification data from this verification operation may also be collected 172 and stored 174 in a data storage. This data storage may be a third data storage, which is separate from either or both of the earlier-mentioned first and second data storages. Alternatively, it is a same data storage as one of or both of the first and second data storages. If verification operations 170 are performed or otherwise carried out, verification data from such operations can be fed back to the computer device performing or otherwise implementing the method 100. For example, the action 140 of producing the digital model may then include producing the digital model of said product in such way that the digital model is based on i) material characteristics data, ii) the desired three-dimensional design of the product to be manufactured as well as iii) the collected verification data. This may lead to even further refinements in the predictions that contribute to the creation of the digital models.

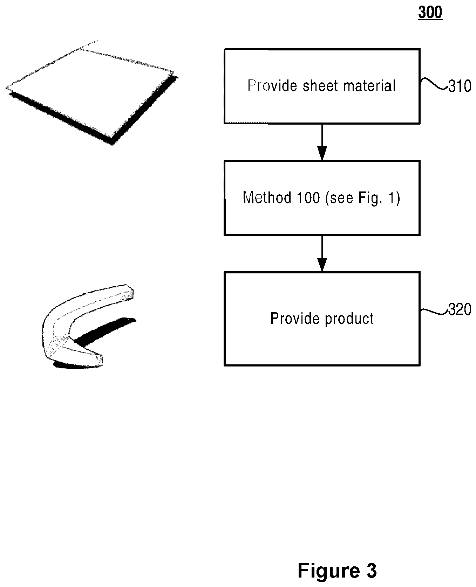

As will be appreciated, the method 100 may be part of an automated manufacturing method. In other words, the present disclosure also proposes an automated manufacturing method which includes the method 100 described in conjunction with Figs 1-2. To this end, reference is made to Fig. 3 which illustrates an example embodiment of an automated manufacturing method. In this example, all actions are performed at a single location such as a manufacturing site. However, a person skilled in the art will appreciate that it is not necessary that all actions, or method steps, are performed or otherwise carried out at a single location.

*Action 310:* A two-sheet material, such as sheet metal as exemplified in the methods discussed with respect to Fig. 1 is provided. Once provided, the method may continue to carry out any one of the methods discussed with respect to Figs. 1-2.

*Action 320:* A product is provided. This product is manufactured in accordance to the digital model as discussed earlier in connection with the description of Figs. 1-2.

Various aspects and embodiments described herein provide a new approach, which is an alternative to (or, improvement over) the existing prior art. The various aspects and embodiments allow for the manufacturing of the product, or object, which is identical, or substantially identical, to a digital model thereof. The digital model is a digital representation of the physical object to be manufactured. As such, the digital model may serve as a simulation of the physical product to be manufactured. Since the new approach takes into account relevant materials characteristics data along with the desired three-dimensional design of a product to be manufactured, the digital model can be seen as a digital representation of what can be achieved in the real world, i.e. with respect to the physical product to be manufactured.

### Example implementations of embodiments of the communication device

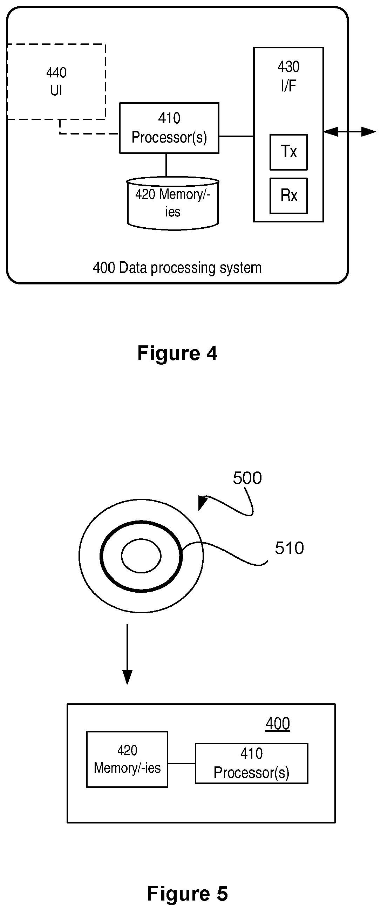

Fig. 4 illustrates a data processing system 400, which is configured for performing or otherwise executing the methods according to the various aspects and embodiments discussed in this disclosure. In some embodiments, the data processing system 400 is embodied as a computer device. For example, the data processing system 400 may comprises means adapted to obtain material diagnostic data relating to said two-dimensional sheet material; means adapted to analyze, or otherwise evaluate, the obtained material diagnostic data to produce material characteristics data; means adapted to obtain information related to a desired three-dimensional design of a product to be manufactured by the manufacturing operation; means adapted to produce a digital model of said product, the digital model being based on said material characteristics data and said desired three-dimensional design of the product; and means adapted to generate a control signal to cause said manufacturing operation to be carried out by a manufacturing equipment, the control signal being based on said digital model and being configured to cause the manufacturing equipment to carry out a material reshaping operation on a two-dimensional sheet material to form said physical three-dimensional product in accordance with the digital model. As is schematically illustrated in Fig. 4, the data processing system 400 may in some implementations comprise hardware 410, 420, 430, 440. For example, the data processing system 400 may comprise one or more processors 410 and one or more memories 420. As will be appreciated, the at least one memory 420 may comprise instructions executable by the at least one processor 410 whereby the data processing system 400 is operative to perform the methods described in this disclosure. Also, a communications interface 430 may be provided in order to allow the data processing system 400 to communicate with other data processing systems and/or communication devices, e.g. via a network such as the Internet. To this end, the communications interface 430 may comprise a transmitter (Tx) and a receiver (Rx). Alternatively, the communications interface 430 may comprise a transceiver (Tx/Rx) combining both transmission and reception capabilities. The communications interface 430 may include a radio frequency (RF) interface allowing the data processing system 400 to communicate with other data processing systems and/or communication devices through a radio frequency band through the use of different radio frequency technologies such as 5G NR (New Radio), LTE (Long Term Evolution), WCDMA (Wideband Code Division Multiple Access), or any other cellular network standardized by the 3rd Generation Partnership Project (3GPP), or any other wireless technology such as Wi-Fi, Bluetooth^{®}, etcetera. The data processing system 400 may optionally also comprise a UI 440 through which a user can interact with and operate functions of the data processing system 400.

### Example computer-readable mediums

Turning now to Fig. 5, another aspect will be briefly discussed. Fig. 5 shows an example of a computer-readable medium, in this example in the form of a data disc 500. In one embodiment the data disc 500 is a magnetic data storage disc. The data disc 500 is configured to carry instructions 510 that can be loaded into a memory 420 of a data processing system 400. Upon execution of said instructions by a processor 410 of the data processing system 400, the data processing system 400 is caused to execute a method or procedure according to the aspects and embodiments disclosed in this disclosure. The data disc 500 is arranged to be connected to or within and read by a reading device (not shown), for loading the instructions into the processor. One such example of a reading device in combination with one (or several) data disc(s) 500 is a hard drive. It should be noted that the computer-readable medium can also be other mediums such as compact discs, digital video discs, flash memories or other memory technologies commonly used. In such an embodiment the data disc 500 is one type of a tangible computer-readable medium. The instructions may alternatively be downloaded to a computer data reading device, such as the data processing system 900 or a other computer capable of reading computer coded data on a computer-readable medium, by comprising the instructions in a computer-readable signal (not shown) which is transmitted via a wireless (or wired) interface (for example via the Internet) to the computer data reading device for loading the instructions into a processor 410 of the data processing system 400. In such an embodiment, the computer-readable signal is one type of a non-tangible computer-readable medium.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation.

Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A computer-implemented method (100) of controlling a manufacturing operation of a physical three-dimensional product from a two-dimensional sheet material, the method comprising:
obtaining (110) material diagnostic data relating to said two-dimensional sheet material;
analyzing, or otherwise evaluating, the obtained material diagnostic data to produce (120) material characteristics data;
obtaining (130) information related to a desired three-dimensional design of a product to be manufactured by the manufacturing operation;
producing (140) a digital model of said product, the digital model being based on said material characteristics data and said desired three-dimensional design of the product; and
generating (150) a control signal to cause said manufacturing operation to be carried out by a manufacturing equipment, the control signal being based on said digital model and being configured to cause the manufacturing equipment to carry out a material reshaping operation on a two-dimensional sheet material to form said physical three-dimensional product in accordance with the digital model.

2. The computer-implemented method (100) of claim 1, comprising:
receiving (110) said material diagnostic data from a remote location;
collecting (112) said material diagnostic data in a first data storage;
analyzing, or otherwise evaluating, said material diagnostic data to produce (120) said material characteristic data; and
collecting (122) said material characteristic data in a second data storage.

3. The computer-implemented method (100) of claim 1, comprising:
performing (110) at least one material diagnostic test on said two-dimensional sheet material to output said material diagnostic data;
collecting (112) said material diagnostic data in a first data storage;
analyzing (120), or otherwise evaluating, said material diagnostic data to produce said material characteristic data; and
collecting (122) said material characteristic data in a second data storage.

4. The computer-implemented method (100) of claim 2 or 3, wherein the first and second data storages are separate data storages.

5. The computer-implemented method (100) of claim 2 or 3, wherein the first and second data storages are a same data storage.

6. The computer-implemented method (100) of any one of the claims 2-5,
wherein analyzing said material diagnostic data to produce (120) said material characteristic data includes training a machine learning algorithm to model the material characteristics data:
initialising (122) the machine learning algorithm;
observing (124) a first state of said material diagnostic data;
observing (126) a change from the first state to a second state, the change resulting from performance of at least one material diagnostic test that has an effect on said material diagnostic data; and
updating (128) the machine learning algorithm based on the observed change of state.

7. The computer-implemented method (100) of any one of the claims 2-6, further comprising:
performing (170) a verification operation of the physical product of the material re-shaping operation to verify a degree of possible deviation between said digital model and said physical product;
collecting (172) verification data from said verification operation; and
storing (174) said verification data in a third data storage.

8. The computer-implemented method (100) of claim 7, wherein producing (140) said digital model of said product includes producing said digital model of said product in such way that the digital model is based on said material characteristics data, said desired three-dimensional design of the product and said verification data.

9. An automated manufacturing method (300) for a physical product, the method including the computer-implemented method (100) of any one of the claims 1-8.

10. A computer program comprising instructions (510) which, when executed on at least one processor, cause the at least one processor to carry out the method according to any one of the claims 1-9.

11. A carrier comprising the computer program according to claim 10, wherein the carrier is any one of an electronic signal, an optical signal, a radio signal, or a computer-readable medium (500).

12. A data processing system (400) for controlling a manufacturing operation of a physical three-dimensional product from a two-dimensional sheet material, comprising:
at least one processor (410); and
at least one memory (420), wherein the at least one memory (420) comprises instructions executable by the at least one processor (410) whereby the data processing system (400) is operative to perform the method according to any one of the claims 1-9.
